Europäisches Patentamt

European Patent Office

Office européen des brevets

(11) Veröffentlichungsnummer: 0 209 097
A1

(12) EUROPÄISCHE PATENTANMELDUNG

(21) Anmeldenummer: 86109565.1

(22) Anmeldetag: 12.07.86

(51) Int. Cl.⁴: G 01 P 15/08

(30) Priorität: 15.07.85 DE 8520392 U

(43) Veröffentlichungstag der Anmeldung: 21.01.87
Patentblatt 87/4

(84) Benannte Vertragsstaaten: AT BE CH DE FR GB IT LI LU
NL SE

(71) Anmelder: HELBA Elektronik-Baugruppen GmbH & Co.
KG, Schopshofer Weg 27, D-5628 Heiligenhaus (DE)
Anmelder: Lilienthal, Karl-Heinz, Südring 61a,
D-5628 Heiligenhaus (DE)

(72) Erfinder: Burmester, Heino, Leibnizstrasse 17,
D-5628 Heiligenhaus (DE)
Erfinder: Lilienthal, Karl-Heinz, Südring 61a,
D-5628 Heiligenhaus (DE)

(74) Vertreter: Götz, Friedrich, Dipl.-Phys., Tulpenweg 15,
D-5628 Heiligenhaus (DE)

(54) Beschleunigungssensor.

(57) Die Erfindung betrifft einen Beschleunigungssensor mit
einem Trägheitskörper (4), dessen Lage durch eine aus
Sender (2) und Empfänger (3) bestehende Lichtschranke (2,
3) überwacht ist.

Die Erfindung soll einen Sensor mit besonders kurzer
Ansprech- und Rückstellzeit schaffen, der eine selektive
Stossauswertung erlaubt.

Die Erfindung zeichnet sich dadurch aus, dass der Trägheitskörper (4) ein einseitig eingespannter, lichtleitender
Federstab ist, der je nach Beschleunigung das Licht eines
Senders (2) von einem Empfänger (3) wegleitet oder auf
mindestens einen von mehreren Empfängern hinführt.

ACTORUM AG

## Beschleunigungssensor

Die Erfindung betrifft einen Beschleunigungssensor mit einem Trägheitskörper, dessen Lage durch eine aus Sender und Empfänger bestehende Lichtschranke überwacht ist. Derartige Sensoren werden vorwiegend in Kraftfahrzeugen eingesetzt.

Aus der europäischen Patentanmeldung EP 0 125 493 A1 ist ein Beschleunigungsgrenzwertschalter mit einem kugelförmigen Trägheitskörper bekannt geworden, der von einem Magnetsystem in der Ruhelage gehalten wird. Beim Überschreiten eines Beschleunigungsgrenzwertes löst sich die Kugel aus ihrer Ruhelage und betätigt nach einer gewissen Flugzeit einen Kontakt. Die Kontaktgabe kann sowohl mechanisch als auch über eine Lichtschranke erfolgen.

Beim Auftreten einer Beschleunigung bestimmter Größe reißt die Kugel von ihrem Haltemagnet ab und fliegt infolge ihrer Massenträgheit in eine Richtung, die der Beschleunigung entgegengesetzt ist. Bis zum Erreichen des mechanischen Kontaktes oder der Auslösung der Lichtschranke vergeht dabei eine Mindestzeit. Diese Zeit wird bei bestimmten Störungsabläufen als zu lang empfunden. Auch kann die Rückkehrzeit der Kugel in die Ruhelage zu lang werden, weil als Rückstellkraft nur die Schwerkraft wirkt.

Der Erfindung liegt die Aufgabe zugrunde, einen verbesserten Beschleunigungssensor mit extrem kurzer Ansprechzeit und Rückschaltzeit zu schaffen, mit dem man Stöße verschiedener Stärke und Dauer selektiv erfassen und analog auswerten kann.

Diese Aufgabe wird dadurch gelöst, daß der Trägheitskörper als lichtleitender Federstab ausgebildet ist, der einseitig derart eingespannt ist, daß seine Längsachse mit der optischen Achse der Lichtschranke zusammenfällt.

Zwei Ausführungsbeispiele der Erfindung werden anhand von Fig. 1 - 5 der Zeichnung beschrieben.

Fig. 1   zeigt einen Längsschnitt durch den neuartigen Beschleunigungssensor in der Ruhelage,

Fig. 2   den gleichen Schnitt beim Einwirken einer Beschleunigung in Richtung des Pfeiles A,

Fig. 3   einen Querschnitt in der Ebene BC in Fig. 2,

Fig. 4   einen Längsschnitt durch eine andere Ausführungsform,

Fig. 5   einen Querschnitt entlang der Linie FG in Fig. 4.

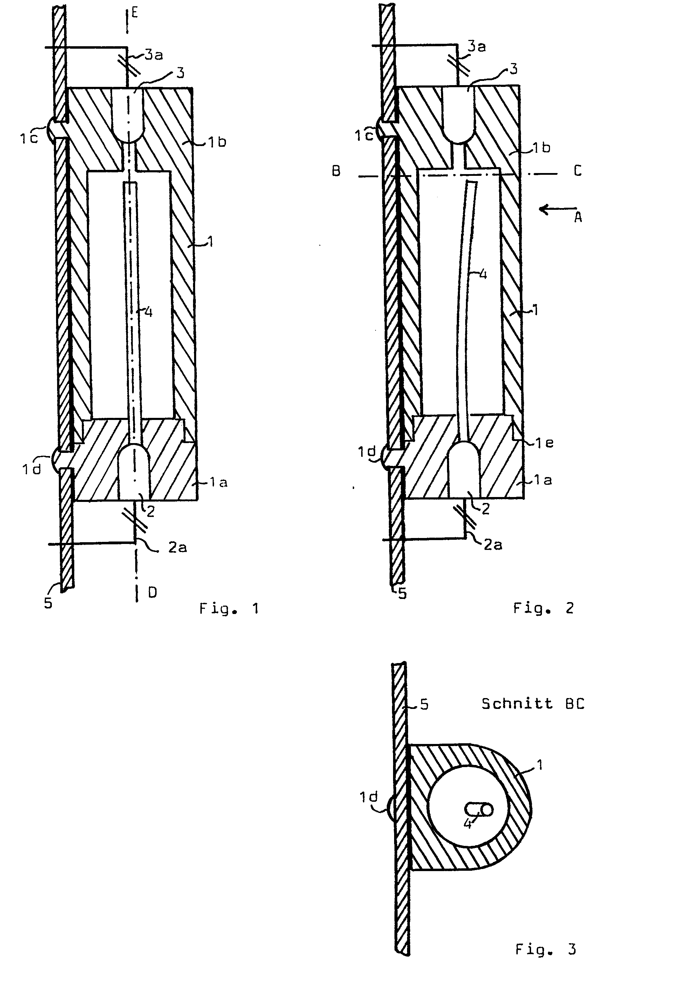

In Fig. 1 ist mit 1 ein hohlzylindrisches Gehäuse bezeichnet, dessen Zylinderachse DE zugleich die optische Achse zwischen einem Lichtsender 2 und einem Lichtempfänger 3 ist. Der Boden 1a des Gehäuses ist verstärkt, so daß er im Bereich der Zylinderachse DE sowohl den Lichtsender 2 als auch einen Trägheitskörper 4 umschließt. Der Trägheitskörper 4 ist als lichtleitender Federstab ausgebildet, dessen oberes Ende frei der Eintrittsfläche des Lichtempfängers 3 gegenübersteht. Der Lichtempfänger 3 ist in den Deckel 1b des Gehäuses eingesetzt. Als Lichtsender 2 kommt vorzugsweise eine Leuchtdiode infrage, als Lichtempfänger 3 eine Fotodiode oder ein Fototransistor. Die Wellenlänge kann im sichtbaren oder auch im infraroten Bereich liegen.

Das zylindrische Gehäuse 1 ist mit angeformten Stiften 1c, 1d an einer biegesteifen Leiterplatte 5 befestigt, die auch die zugehörige Auswerteelektronik aufnimmt. Sender und Empfänger sind über Drahtpaare 2a, 3a mit der Leiterplatte 5 verbunden.

**0 209 097**

Im Ruhezustand entsprechend Fig. 1 fällt die Achse des Lichtleitstabes 4 mit der optischen Achse DE zusammen, so daß der Lichtstrehl des Senders 2 voll den Empfänger 3 erreicht.

Unter der Einwirkung einer seitwärts gerichteten Beschleunigung entsprechend dem Pfeil A in Figur 2 tritt eine elastische Verformung des Körpers 4 ein, so daß der den Empfänger erreichende Anteil des Lichtstrahles mehr oder weniger abgeschwächt wird.

Da der Trägheitskörper 4 als Stab von Kreisquerschnitt einseitig eingespannt ist, ist die Ansprechempfindlichkeit aus allen Richtungen der Ebene, also über 360°, gleich groß.

Fig. 3 zeigt als Querschnitt BC, daß die Außenlinie des Gehäuses 1 vom Kreis abweicht, um eine stabile Auflagefläche auf der Leiterplatte 5 zu gewinnen. Man erkennt ferner die Verformung des Trägheitskörpers 4. Die Ansprechempfindlichkeit des Sensors kann sowohl durch den Querschnitt und die Federkennlinie des Körpers 4 als auch durch seine freie Länge ausgewählt und beeinflußt werden. Darüber hinaus aber ist es in vorteilhafter Weise möglich, den Ansprechwert elektronisch zu steuern. Aus dem Empfängerstrom kann man außer dem Beschleunigungsgrenzwert auch die analogen Beschleunigungswerte gewinnen und anzeigen oder registrieren. Da der Trägheitskörper 4 nur eine geringe Masse aufweist und schon bei sehr kleinen Verformungen eine Meßwertaussage liefert, folgt die Anzeige der Beschleunigung fast ohne Verzögerung. Das gleiche gilt für die Rückstellung des federnden Körpers.

Als Material für den Trägheitskörper 4 kommt vorwiegend eine totalreflektierende Glasfaser infrage. Der lichtleitende Körper 4 kann auch aus organischem Glas oder aus einem elastischen Röhrchen, z.B. aus Silikongummi, bestehen, das das Licht in seinem luftgefüllten Innenraum weiterleitet. Die Werkstoffe werden so ausgewählt, daß sich der Ansprechwert in dem üblichen Temperaturbereich von +80° bis -30° C nicht wesentlich verändert.

Der Innendurchmesser des Gehäuses 1 wird so groß gewählt, daß der Körper 4 bei Spitzenbeschleunigungen seitlich anstößt, daß also sein elastischer Verformungsbereich nicht überschritten wird.

Bei Verwendung einer Lichtleitfaser als Trägheitskörper mit einem Durchmesser von etwa 0,2 - 0,4 mm kann es zweckmäßig sein, in der Nähe des freien Endes eine Zusatzmasse, beispielsweise in Form eines Kunstharztropfens, anzubringen. Hierdurch wird der Winkelausschlag bei einer bestimmten Beschleunigung vergrößert, also die Ansprechempfindlichkeit erhöht. Bei Beschleunigungsspitzen stößt die Zusatzmasse an die Gehäuseinnenwand, begrenzt also den Ausschlag.

Die Schwingungsdauer einer Lichtleitfaser wird überwiegend durch die Luftdämpfung bestimmt. Zur Verkürzung der Schwingungsdauer kann die Glasfaser auf ganzer Länge oder im Bereich der stärksten Biegebeanspruchung mit einer die innere Reibung erhöhenden Masse überzogen werden.

Bei einem Sensor mit idealen Eigenschaften würde der Ausschlag des Trägheitskörpers dem Beschleunigungsverlauf folgen und beim Erreichen des Nullwertes der Beschleunigung aperiodisch auf Null zurückgehen. In der Praxis überlagern sich die Schwingungen des Trägheitskörpers der Beschleunigungskurve. Das vom Sender auf den Empfänger übertragene Licht wird also von den Schwingungen moduliert, so daß am Empfänger die Hüllkurve der Amplitudenwerte ansteht. Mit Hilfe der Auswerteelektronik ist es nun leicht möglich, bestimmte Bereiche dieser Kurve auszublenden. Zur Eliminierung kurzer, unbeachtlicher Stöße können beispielsweise die ersten 20 ms einer Ereignisses grundsätzlich ausgeblendet werden. Die Auslösung weiterer Vorgänge, insbesondere verschiedener Schutzmaßnahmen, kann von der Erfüllung bestimmter Signal-Zeit-Flächen abhängig gemacht werden.

Die beschriebene Einrichtung ist ein analoger Sensor, der wesentlich vielseitiger einsetzbar ist als ein Grenzwertschalter mit mechanischem Kontakt.

Der neue Beschleunigungssensor kann aus Spritzgußteilen außerordentlich genau und preisgünstig hergestellt werden. Als Material für das Gehäuse wird ein lichtundurchlässiger Thermoplast verwendet, um die Beeinflussung durch Fremdlicht zu verhindern. Die Empfänger- und Sendediode sowie der Trägheitskörper werden direkt mit eingespritzt oder in genau passende Öffnungen eingeschoben. Eine zusätzliche Fixierung kann durch thermische Verformung oder Verklebung erfolgen.

Die Ansprechkennlinie des Sensors wird von der Größe und Form der Lichteintrittsöffnung vor dem Empfänger und ihrem Abstand von der Lichtaustrittsöffnung des Trägheitskörpers bestimmt.

Um die Montage des Trägheitskörpers zu erleichtern, ist es zweckmäßig, das Gehäuse entlang der rotationssymmetrischen Fläche 1e zu teilen. Die Trennflächen können aufgrund moderner Fertigungsverfahren mit sehr geringen Toleranzen ausgeführt werden. Zur Erzielung einer absolut starren Verbindung zwischen den beiden Gehäusehälften sind Kegelpassungen, Ultraschallschweißung oder auch Verklebung einsetzbar. Eine zusätzliche Versteifung ergibt sich nach der Montage auf der Leiterplatte 5 durch die Stifte 1c, 1d, die auf der Rückseite der Platte zu Nietköpfen verformt sind.

Weiterhin ist es möglich, die Zuleitungsdrahtpaare 2a, 3a des Senders 2 und des Empfängers 3 zur zusätzlichen Befestigung des Gehäuses 1 auf der Leiterplatte 5 zu benutzen. Dies setzt aber voraus, daß relativ kräftige und steife Drähte benutzt werden, die im Gehäuse 1 durch den Spritzgußwerkstoff oder zusätzliche Vergußmassen abgestützt werden.

Beim dargestellten Ausführungsbeispiel wird im Ruhezustand ein maximaler Lichtstrom übertragen. Die Lichtmenge am Empfänger, der auch als Fototransistor ausgebildet sein kann, geht bei maximaler Beschleunigung gegen Null. Im Ruhezustand wird also ständig für den Sender und den Empfänger ein Betriebsstrom benötigt.

Bei einer alternativen Bauform wird der Lichtaustrittsfläche des Trägheitskörpers eine Lichtsammellinse gegenübergestellt, die im Mittelbereich geschwärzt ist. Der Empfängerlichtstrom ist dann im Ruhezustand gleich Null und steigt mit der Beschleunigung an. Der gleiche Effekt läßt sich mit einer Ausblendscheibe und einem Sammelspiegel erzielen. Bei diesem inversen Betrieb des Sensors kann der an sich schon niedrige Stromverbrauch noch weiter verringert werden.

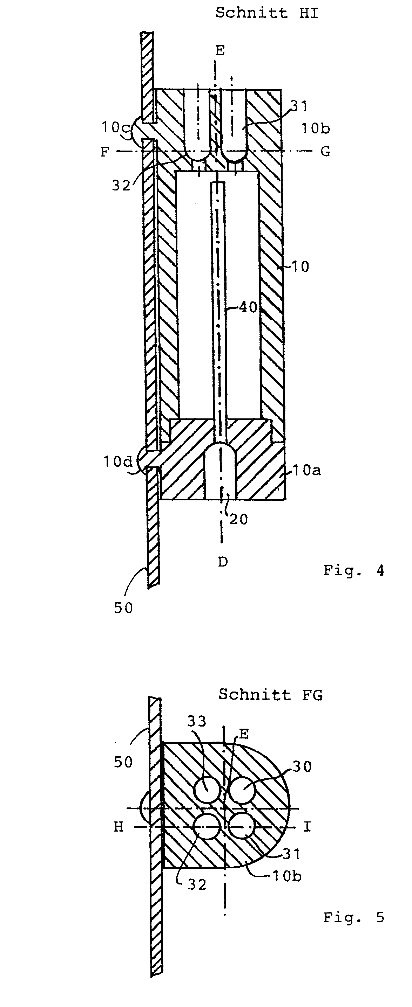

Eine weitere Abwandlung ist in Fig. 4 und 5 dargestellt.

Fig. 4 zeigt den Längsschnitt durch seinen Sensor mit vier um die Achse DE herum angeordneten Empfängern, von denen hier zwei mit den Nummern 31 und 32 in die versetzte Schnittebene fallen. Der Schnitt verläuft entlang der Linie HI in Fig. 5. Dort erkennt man, daß die vier Empfänger 30, 31, 32, 33 praktisch vier Quadranten bilden, in denen die Meßsignale je nach Stoßrichtung anfallen können. Der übrige Aufbau des Gehäuses 10 mit dem Boden 10a, den Stiften 10c, 10d und die Anordnung des Senders 20 und der Leiterplatte 50 stimmt mit Fig. 1 überein.

Der Durchmesser des Trägheitskörpers 40 und die Größe und Lage der den Empfängern 30 - 33 vorgelagerten Lichteintritts- öffnungen können so aufeinander abgestimmt werden, daß man insgesamt acht Richtungsentscheidungen gewinnen kann. Es kann also entweder einer der Empfänger 30 - 33 ansprechen oder die Empfängerpaare 30/31, 31/32, 32/33 oder 33/30 werden aktiviert.

Da der Trägheitskörper 40 trotz Dämpfung nicht aperiodisch ausschwingt, löst ein Stoß mehrere Signale aus, bevor die Schwingung so weit abgeklungen ist, daß der Ansprechwert der Empfänger unterschritten wird. Den Empfängern wird daher eine Auswerteelektronik nachgeschaltet, die es ermöglicht, den ersten Impuls, den sogenannten Hin-Stoß, zu speichern. Daraus kann man dann bei der Unfallauswertung schließen, ob der primäre Stoß von vorn, hinten, links oder rechts erfolgte.

Abweichend von Fig. 4 und 5 können auch sechs oder acht Empfänger im Kreis um die Symmetrieachse angeordnet werden, um eine noch größere Anzahl von Richtungsentscheidungen zu erhalten.

Der neuartige Beschleunigungssensor ist preisgünstig in der Herstellung und erfordert nur wenig Aufwand für die Justierung und Feineinstellung der Ansprechwerte, weil diese Maßnahmen in die Auswerteelektronik verlegt werden. Er ist daher für die gewerbliche Verwertung in der Kraftfahrzeugbranche hervorragend geeignet.

Im Gegensatz zu bekannten Systemen mit mechanischem Kontakt lassen sich hier mehrere Ansprechwerte ableiten, die abgestufte Gegenmaßnahmen ermöglichen.

Vorteilhaft ist ferner, daß der völlig geschlossene Sensor weder durch Schmutz noch durch Witterungseinflüsse in seiner Funktion beeinträchtigt wird und daß er - gemessen an der Lebensdauer eines Kraftfahrzeuges - weder Wartung erfordert noch altersbedingt ausgewechselt werden muß.

## Bezugszeichenliste

| | |
|---|---|
| 1, 10 | Gehäuse |
| 1a, 10a | Boden |
| 1b, 10b | Deckel |
| 1c, 10c, 1d, 10d | angeformte Stifte |
| 2, 20 | Sender |
| 3, 30, 31, 32, 33 | Empfänger |
| 4, 40 | Trägheitskörper |
| 5, 50 | Leiterplatte |

Patentansprüche

1. Beschleunigungssensor mit einem Trägheitskörper, dessen Lage durch eine aus Sender und Empfänger bestehende Lichtschranke überwacht ist, dadurch gekennzeichnet, daß der Trägheitskörper (4) als lichtleitender Federstab ausgebildet ist, der einseitig derart eingespannt ist, daß seine Längsachse mit der optischen Achse (DE) der Lichtschranke (2, 3) zusammenfällt.

2. Beschleunigungssensor nach Anspruch 1, dadurch gekennzeichnet, daß der Trägheitskörper (4) eine totalreflektierende Lichtleitfaser ist, deren eingespanntes Ende mit dem Lichtsender (2) verbunden ist und deren freies Ende vor dem Lichtempfänger (3) steht.

3. Beschleunigungssensor nach Anspruch 2, dadurch gekennzeichnet, daß der Trägheitskörper (4) in der Nähe seines freien Endes mit einer Zusatzmasse verbunden ist, die zugleich den Ausschlag des Körpers begrenzt.

4. Beschleunigungssensor nach Anspruch 2, dadurch gekennzeichnet, daß der Trägheitskörper teilweise oder ganz mit einem schwingungsdämpfenden Belag versehen ist.

5. Beschleunigungssensor nach Anspruch 1, dadurch gekennzeichnet, daß der Trägheitskörper ein elastisches Röhrchen ist, dessen eingespanntes Ende in den Lichtsender übergeht und dessen freie Lichtaustrittsöffnung vor dem Lichtempfänger steht.

6. Beschleunigungssensor nach Anspruch 5, dadurch gekennzeichnet, daß das Röhrchen aus einem gummielastischen Kunststoff besteht, dessen Innendurchmesser dem Durchmesser einer als Lichtsender dienenden Leuchtdiode entspricht.

7. Beschleunigungssensor nach Ansprch 1, dadurch gekennzeichnet, daß der Trägheitskörper (4) und der Lichtsender (2) im verstärkten Boden (1a) eines hohlzylindrischen Gehäuses (1) befestigt sind, daß der Lichtempfänger (3) im Zylinderdeckel (1b) montiert ist und daß die Achsen des Trägheitskörpers, des Lichtsenders, des Lichtempfängers und des Gehäuses zusammenfallen (Linie DE).

8. Beschleunigungssensor nach Anspruch 7, dadurch gekennzeichnet, daß das hohlzylindrische Gehäuse (1) aus lichtundurchlässigem Kunststoff besteht, in dessen Boden (1a) und Deckel (1b) der Trägheitskörper (4) und die Sender- und Empfängergehäuse (2, 3) eingespritzt oder eingeklebt sind.

9. Beschleunigungssensor nach Anspruch 8, dadurch gekennzeichnet, daß im Gehäuseboden und -deckel (1a, 1b) jeweils Drahtpaare (2a, 3a) eingebettet sind, deren innere Enden mit dem Sender (2) und Empfänger (3) verbunden sind und deren äußere Enden zu einer Leiterplatte (5) führen.

10. Beschleunigungssensor nach Anspruch 7, dadurch gekennzeichnet, daß die Innenwand des hohlzylindrischen Gehäuses (1) den Ausschlag des Trägheitskörpers (4) begrenzt.

11. Beschleunigungssensor nach Anspruch 7, dadurch gekennzeichnet, daß das Gehäuse (1) entlang einer Fläche (1e) geteilt ist.

12. Beschleunigungssensor nach Anspruch 2, dadurch gekennzeichnet, daß der Lichtweg durch Blenden und Linsen oder Spiegel im Ruhezustand unterbrochen und bei maximaler Beschleunigung freigegeben ist.

13. Beschleunigungssensor nach Anspruch 2, dadurch gekennzeichnet, daß um die optische Achse (DE) herum mindestens vier Lichtempfänger (31, 32, 33, 34) angeordnet sind, die im Ruhezustand kein Lichtsignal empfangen und im Anregungsfall die Beschleunigungsrichtung angeben.

14. Beschleunigungssensor nach Anspruch 13, dadurch gekennzeichnet, daß das erste Anregungssignal einem elektronischen Speicher zugeführt ist.

0 209 097

Fig. 1

Fig. 2

Schnitt BC

Fig. 3

Schnitt HI

E

31

10c

10b

F — — G

32

10

40

10d

10a

20

D

50

Fig. 4

Schnitt FG

33

50

E

30

H — — I

31

32

10b

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 140 584 (CALSPAN CORP.) <br> * Seite 11, Zeile 35 - Seite 12, Zeile 4; Figur 4 * | 1 | G 01 P 15/08 |
| A | | 3,4,8-10 | |
| | * Seite 8, Zeilen 28-36; Seite 10, Zeile 32 - Seite 11, Zeile 8; Seite 11, Zeilen 21-26; Figuren 1-3 * | | |
| | --- | | |
| X | US-A-3 224 279 (G. GALLI et al.) <br> * Spalte 2, Zeilen 21-44; Spalte 2, Zeile 68 - Spalte 3, Zeile 2; Spalte 4, Zeilen 38-55; Figuren 1,2,6 * | 1,2 | |
| | --- | | |
| X | FR-A-2 532 433 (ROBERT BOSCH GmbH) <br> * Seite 4, Zeilen 10-20; Figur 1b * | 1 | **RECHERCHIERTE SACHGEBIETE (Int. Cl.4)** <br> G 01 P <br> G 01 D |
| | --- | | |
| X | EP-A-0 129 536 (VOEST-ALPINE AG) <br> * Seite 4, Zeilen 4-21; Figur 1 * | 1 | |
| A | | 10 | |
| | * Seite 4, Zeilen 22-26 * | | |
| | ---    -/- | | |

Der vorliegende Recherchenbericht wurde für alle Patentansprüche erstellt.

| Recherchenort <br> DEN HAAG | Abschlußdatum der Recherche <br> 28-10-1986 | Prüfer <br> PENZKOFER,B. |
|---|---|---|

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-A-3 334 395 (FRAUNHOFER-GESELLSCHAFT ZUR FÖRDERUNG DER ANGEWANDTEN FORSCHUNG E.V.) * Seite 3, Zeilen 1-25; Figur 1 * --- | 5 | |
| A | DE-A-3 232 382 (BARTKOWIAK KLAUS) * Seite 5, Zeilen 11-27; Figur F2 * ----- | 13 | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 28-10-1986 | Prüfer PENZKOFER, B. |
|---|---|---|